# EUROPEAN PATENT SPECIFICATION

(11) **EP 1 977 883 B1**
(45) Date of publication and mention of the grant of the patent: **12.03.2014**
(21) Application number: 07706878.1
(22) Date of filing: 17.01.2007
(51) Int. Cl.: D06N 3/00, B44C 1/24, B44F 9/12, B32B 5/24, B32B 27/12, B32B 5/18, B32B 27/24

(54) **FABRIC WITH HIGHLY EXPANDED LAYER AND PROCESS FOR PRODUCTION THEREOF**
GEWEBE MIT STARK AUSGEDEHNTER SCHICHT UND HERSTELLUNGSVERFAHREN DAFÜR
TISSU AVEC COUCHE FORTEMENT EXPANSÉE ET SON PROCEDE DE FABRICATION

(30) Priority: 17.01.2006 JP 2006009220; 17.01.2006 JP 2006009221; 11.11.2006 JP 2006306072
(43) Date of publication of application: 08.10.2008
(73) Proprietor: Unitika Fibers LTD., Osaka-shi Osaka, 5410058 (JP); Seiren Co., Ltd, Fukui-shi, Fukui 918-8003 (JP)
(72) Inventor: NAKAGAWA, Kiyoshi, Osaka-shi Osaka 541-0058 (JP); KURUSHIMA, Yoshiaki, Osaka-shi Osaka 541-0058 (JP); MIZUMA, Masahiro, Fukui-shi, Fukui 918-8003 (JP)
(74) Representative: Volpert, Marcus
(86) International application number: PCT/JP2007/050551
(87) International publication number: WO 2007/083641

(56) References cited:
- EP-A1- 1 321 291
- EP-A2- 1 072 641
- DE-A1- 10 161 916
- JP-A- 02 164 527
- JP-A- 07 126 984
- JP-A- 2001 303 341
- US-A- 4 044 176

## Description

### Technical Field

The present invention relates to a fabric having a foamed layer and a method for producing thereof. Especially, the invention relates to the fabric which is suitable as a material of casual wear, sports wear and climbing wear etc., and the method for producing thereof.

### Background Art

Fabrics having various foamed layers are generally proposed. The fabrics have various designs by forming three dimensional resin layers on various patterns. The means of forming the three dimensional resin layer is done by using the foaming agent consisting of heat expansible micro capsules. That is, the means is comprising of applying resin solution such as ink for printing in which heat expansible micro capsules are contained, on the surface of a base sheet, and heating the micro capsules to expand after applying.

For example, the patent reference 1 discloses the following method to produce a leather having a three dimensional printed pattern. That is, the method is comprising of printing the ink containing heat expansible micro capsules on the surface of the base sheet with a pattern, laminating a protective layer such as a clear film on the pattern, and expanding the micro capsules by heating.

The patent reference 2 discloses the following method to produce the multi-layers having three dimensional printed pattern. That is, the method is comprising of silk screen printing the polyurethane resin solution which contains heat expansible micro capsules on the surface of the base sheet with a pattern, forming a colored layer on the pattern, and expanding the micro capsules by heating.

Patent reference 1: JP60-246878 (the paragraph of claims)
Patent reference 2: JP10-329297 (the paragraph number of 0025 and 0026)

EP 1 321 291 A1 discloses a moisture-permeable/waterproof heat-retaining fabric comprising a textile fabric base material and a moisture-permeable/waterproof resin film containing hollow microcapsules and/or an infrared absorber, provided on at least one side thereof, and a release sheet-attached moisture-permeable/waterproof heat-retaining resin film which comprises a release sheet and a moisture-permeable/waterproof resin film containing hollow microcapsules and/or infrared absorber, provided thereon, for production of the moisture-permeable/waterproof fabric. The fabric is lightweight and heat-retaining, exhibits both waterproofness and moisture permeability, and is comfortable and prevents a stuffy feel even after sweating after vigorous exercise.

Document US 4,044,176 discloses a fabric with a patterned layer based on heat-expandable microspheres and a resin matrix which may be cross-linkable. The patterned layer can be used on e. g. clothing.

EP 1 072 641 A2 discloses polymer particles containing a polymer of a vinylarene monomer, a porous silicate compound and at least 1.5 % by weight of water, based on the weight of vinylarene, water and porous silicate compound, wherein the porous silicate compound is selected from alumino silicates and amorphous silica particles, and a process for the preparation of such polymer particles.

DE 101 61 916 A1 discloses a method for treating a foamable plastic material according to which the plastic material is transmitted from a first condition having a higher density into a second condition having a lower density wherein the plastic material is cross-linked before forming by a first cross-linking means and during forming by means of second cross-linking means.

### Problem to be solved by the invention

The patent reference 1 and 2 disclose to contain the heat expansible micro capsules in the resin solution such as the printing ink, to form the resin layer by using the resin solution, and to expand the micro capsules by heating. Therefore, the resin layer is three dimensionally transformed by the expanded micro capsules.

However, in the case of a hard resin layer, the micro capsules may be difficult to expand. For example, in the case of a cross-linked resin layer, the micro capsules are difficult to expand because the cross-linked resin layer is hard. Therefore, the cross-linked resin layer is not three dimensionally transformed.

The inventors investigated a method for transforming the hard resin layer such as the cross-linked resin layer by expanding the micro capsules. As the result, the inventors have discovered that the micro capsules are easy to expand in the cross-linked resin layer by mixing the micro capsules and silica fine powders each of which are hydrophilic and fine porous. The reason of expanding the micro capsules by mixing the silica fine powders, may be not clear. However, the inventors have discovered the fact that the micro capsules are easy to expand only by using the silica fine powders each of which are hydrophilic and fine porous as the after-described examples. The invention is on the discovery.

### Means for solving the problem

The invention relates to the fabric having the foamed layer which is laminated the foamed resin layer on the one side surface of the fabric material. The foamed resin layer is comprising of heat expanded micro capsules, synthetic resin to hold the heat expanded micro capsules on the one side surface of the fabric material, and silica fine powders each of which is hydrophilic and fine porous, and which are existent on the face of the each capsule wall and in the synthetic resin. Moreover, the method for producing the fabric having the foamed layer is comprising of the following processes. There are applying synthetic resin solution which contains heat expansible micro capsules and silica fine powders each of which is hydrophilic and fine porous on the one side surface of the fabric material, forming a synthetic resin layer by drying the applied synthetic resin solution, and expanding the heat expansible micro capsules by heating the synthetic resin layer. Furthermore, the method for foaming a synthetic resin layer is comprising of applying synthetic resin solution which contains heat expansible micro capsules and silica fine powders each of which is hydrophilic and fine porous on the base sheet, forming a synthetic resin layer by drying the applied synthetic resin solution, and expanding the heat expansible micro capsules by heating the synthetic resin layer.

### Explanation of fabric material

As the fabric material in the invention, wear material such as textile, knitting, nonwoven fabric, synthetic leather and etc. are generally used. Because the fabric having the foamed layer in the invention is suitable as the wear material of the casual wear, sports wear, climbing wear and etc. However, the fabric material in the invention is not limited to the wear material, but the other fabric material may be used. Moreover, the fabric material is not limited to a fabric itself, but a synthetic resin sheet or film, a paper and the other base sheet may be used.

Various fibers in the fabric material are voluntarily used. For example, it may be used by itself or mixture to be a polyamide synthetic fiber such as nylon6 or nylon66, a polyester synthetic fiber such as polyethylene terephthalate, a polyacrylic nitrile synthetic fiber, a polyvinyl alcohol synthetic fiber, a semi-synthetic fiber such as triacetate and a natural fiber such as cotton.

Water repellent may be applied to the one or both surface of the fabric material. Especially, it is suitable to apply the water repellent to the surface of the fabric material on which the foamed layer will be laminated. Because it prevents that the foamed layer deeply penetrates in the fabric material or exudes the back of the fabric material, when the foamed layer is laminated on the surface of the fabric material. The water repellent is carried out by using well-known agent such as paraffin, polysiloxane or perfluoro water repellent agent. As the method of the water repellent, well-known method such as padding or spray method is used. Especially, in the case that sufficient water repellency is needed, the following method may be used. That is, AG7000(emulsion of fluorinated water repellent agent sold by Asahi Glass Co, Ltd.) water dispersion at 5 wt% is prepared. After the fabric material is impregnated with the water dispersion, the fabric material is padded at 35% in pick up. And the fabric material is heated at 150°C to 170°C in 30 seconds to 2 minutes.

### Explanation of foamed layer

The foamed layer substantially consists of synthetic resin, heat expanded micro capsules, and silica fine powders each of which is hydrophilic and fine porous. Each material in the foamed layer may be suitably existent at the rate of the followings. The heat expanded micro capsules are preferably 3 parts to 50 parts, more preferably 5 parts to 30 parts by mass per 100 parts by mass of the synthetic resin. If the heat expanded micro capsules are less than 3 parts, it tends to lack three dimensionality of the foam layer. If the heat expanded micro capsules are more than 50 parts, it tends that the heat expanded micro capsules are dropped out. Because the rate of the synthetic resin is relatively low, and it is difficult to hold the heat expanded micro capsules with the synthetic resin. The silica fine powders are preferably 3 parts to 50 parts, more preferably 5 parts to 40 parts by mass per 100 parts by mass of the synthetic resin. If the silica fine powders are less than 3 parts, it tends to lack to expand sufficiently the heat expansible micro capsules. If the silica fine powders are more than 50 parts, it tends that the foamed layer is hard. The rate of the heat expanded micro capsules and the silica fine powders is preferably 1:3~3:1 (parts by mass) =the capsules : the powders. If the capsules or the powders are more than this extent, it tends to lack to expand sufficiently the heat expansible micro capsules.

### Explanation of synthetic resin of foamed layer

Various synthetic resins which adhere to the fabric material are used as the synthetic resin in the invention. For example, it is used as the synthetic resin to be adhesive resin such as polyurethane, polyvinyl acetate etc.. Especially, cross-linked synthetic resin is used as the synthetic resin in the invention. Concretely, as the cross-linked synthetic resin, the following resins are used. It is used to be cross-linked polyurethane, polyester, polyacryl, polyamide, poly-ethylenevinylacetate and etc.. They are obtained by using self cross-linkable polyurethane, polyester, polyacryl, polyamide, poly-ethylenevinylacetate and etc. which have reactive group such as hydroxy group, isocyanate group, amino group, carboxyl group and etc.. Moreover, they are obtained by cross-linking polyurethane, polyester, polyacryl, polyamide, poly-ethylenevinylacetate and etc. with cross-linking agents such as isocyanate, epoxy, melamine agents and etc.. In the case that the fabric relating to the invention is used as the wear material, it is preferable that the foamed layer is soft. Moreover, the synthetic resin is preferably waterproof and moisture permeable resin. Therefore, the waterproof and moisture permeable synthetic resin which is obtained by the following method is suitable. That is, polyurethane polymer having hydroxy groups to the both ends which is obtained by polymerized polyisocyanate and polyole is prepared. And the polyurethane polymer is cross-linked by cross-linking agent of haxamethylene diisocyanate.

Aromatic diisocyanate, aliphatic diisocyanate, alicyclic diisocyanate and etc. are used by itself or mixture as the polyisocyanate to obtain the polyurethane polymer. Concretely, it is used by itself or mixture to be tolylene 2,4-diisocyanate, 4,4'-diphenylmethane diisocyanate, 1,6-hexane diisocyanate and polyisocyanate having functional groups more than three. Polyether polyol, polyester polyol and etc. are used by itself or mixture as the polyol to obtain the polyurethane polymer. For example, it is used by itself or mixture as the polyeter polyol to be polyethylene glycol, polypropylene glycol, polytetramethylene glycol and etc.. It is used as the polyester polyol to be reaction products of diol such as ethylene glycol, propylene glycol ant etc. and dibasic acid such as adipic acid, sebacic acid and etc., and to be a polymer which is obtained by ring-opening polymerization of caprolactone and etc..

The cross-linking agent of the polyurethane polymer is used to increases adhesive strength and peeling resistance between the foamed layer and the fabric material. Isocyanate compound is preferably used as the cross-linking agent. The isocyanate compound is mixed in the polyurethane polymer. For example, it is used as the isocyanate compound to be tolylene 2,4-diisocyanate, diphenylmethane diisocyanate, isophorone diisocyanate, hexamethylene diisocyanate. Moreover, addition reaction products of triisocyanate from 3 mols of the above-said diisocyanates and 1 mol of the compound having active hydrogen (for example, trimethylolpropane, glycerin and etc.) are used as the isocyanate compound. Isocyanate group of the isocyanate compound may be free. Moreover, Isocyanate group may become free by heating addition block products from the isocyanate compound with phenol, lactam, methyl ketone and etc.. Either isocyanate compound is used on the basis of workability, uses and etc.. The mass of the mixed isocyanate compound may be preferably 0.1~10 parts by mass per 100 parts by mass of the polyurethane polymer. If the mixed isocyanate compound is less than 0.1 parts, it tends that the adhesive strength between the foamed layer and the fabric material does not sufficiently increase. If the mixed isocyanate compound is more than 10 parts, it tends that the obtained fabric is hard.

### Explanation of micro capsule of foamed layer

The heat expanded micro capsule is obtained by expanding the heat expansible micro capsule with heating. As the heat expansible micro capsule, well-known heat expansible micro capsules are used. Concretely, the heat expansible micro capsule is about 5∼50µm in particle size. The wall of the heat expansible micro capsule is made of thermoplastic resin which is polymer such as vinylidene chloride, acrylonitrile and etc.. The encapsulated material is hydrocarbon having low boiling point such as isobutane, isopentane, n-pentane and etc.. The expansion ratio of the heat expansible micro capsule is about 20~70 times in the case of heating at about 80~200°C. Therefore, the heat expanded micro capsule which has freely expanded is about 13µm ~2.1mm in particle size.

### Explanation of silica fine powder of foamed layer

As the silica fine powders, well-known silica fine powders are used. The silica fine powders is produced by the conventional method of wet process (gel process or sedimentation process) or dry process. The silica fine powder has hydrophilic group of OH group on this surface and has many micropores. The silica fine powder has a particle size between 0.01 and 200 µm, preferably between 1 and 100 µm. It is suitable that the particle size of the silica fine powder is equal or larger than the particle size of the heat expansible micro capsule, because the heat expansible micro capsule is easy to expand. The reason may be guessed that the expansion of the heat expansible micro capsule is permitted among the silica fine powders.

### Relation of foamed layer and fabric material

The foamed layer may be laminated on the all area or the specified area with pattern of the one side surface of the fabric material. In the case that the fabric is used as wear material, the patterned foamed layer is preferably laminated because of fashion and design. The design of the pattern may be voluntary, for example, dot shape, lattice shape, line shape, slash shape, pyramid shape, tortoise shell shape and etc.. Moreover, the design of the pattern may be random or regularly arrangement of the specified trade mark. The area ratio of the pattern per the one side of the fabric material may be preferably 5~90%, more preferably 10 ~80% by area. If the area ratio is less than 5%, it tends that the fabric having superior design is not obtained because of lacking of three dimensionality. If the area ratio is more than 90%, the fabric tends to hard.

The foamed layer may be directly laminated or may be laminated with an adhesive layer on the one side surface of the fabric material. As the adhesive agents of the adhesive layer, well-known adhesive agents are used. Concretely, it is used by itself or mixture to be natural rubber, nitrile rubber, synthetic rubber such as chloroprene rubber and etc., vinyl acetate resin, acrylic resin, polyamide resin, polyester resin, ethylene-vinylacetate resin, polyurethane resin and etc.. Especially, it is suitable to use a cure-type adhesive agent because of durability of the adhesive layer. As the cure-type adhesive agent, cross-linkable polyurethane, polyester, polyacryl, polyamide, poly-ethylenevinylacetate and etc. which have reactive group such as hydroxy group, isocyanate group, amino group, carboxyl group and etc. are preferably used. They are cured by self cross-linking or by cross-linking with cross-linking agents such as isocyanate and epoxy and etc.. More especially, the cross-linkable polyurethane is preferably used as the adhesive agent because it is superior in softness and moisture permeability.

The adhesive layer may be formed on all area or specified area with dot shape. The adhesive layer is about 5~100 µm, preferably 10~80 µm, more preferably 20~50 µm in thickness. If the adhesive layer is less than 5µm, the adhesive strength may be lowered. If the adhesive layer is more than 100µm, the adhesive strength may be hardly increased and the obtained fabric may be hard. Moreover, the moisture permeability of the fabric tends to lower in the case of obtaining a waterproof and moisture permeable fabric by using the waterproof and moisture permeable synthetic resin. In the case that the adhesive layer consists of many dots, each dot is preferably less about 1 mm in diameter. The area ratio of all dots is preferably more than 30% by area. When the adhesive layer consists of dots, the obtained fabric is superior to design. Moreover, it is superior to moisture permeability in the case of the waterproof and moisture permeable fabric.

### Explanation of Protective layer

It is suitable that the protective layer is more laminated on the foamed layer. The protective layer prevents that the heat expanded micro capsules drop out because of rubbing the foamed layer. The protective layer may be laminated on all area of the fabric. In the case that the foamed layer is laminated at pattern, the protective layer may be laminated only on the patterned foamed layer. That is, the protective layer may be synchronously laminated on the patterned foamed layer. It may be voluntary used to be various fabrics, resin films, papers and etc. as the protective layer. In the case of using the resin film as the protective layer, the resin film may contain filler such as titanium dioxide, calcium carbonate and etc., organic or inorganic pigment, slipping agent such as silicon dioxide and etc., deodorant of zeolite agent, antibacterial agent of titanium oxide having photo catalyst activity and etc.. The resin film containing the above material is superior to characteristic or functionality. The resin film may be preferably 1~100µm, more preferably 2~50µm in thickness.

### Explanation in the case of using waterproof and moisture permeable resin layer as protective layer

It is suitable that the protective layer is made of the waterproof and moisture permeable resin, in the case of using the fabric having the foamed layer in the invention as the wear fabric. As the waterproof and moisture permeable resin, well-known resins such as polyurethane, aminoacid-urethane copolymer, acrylic, polyester, polytetrafluoroethylene and etc. are used. These synthetic resins are too used as the synthetic resins in the foamed layer. The waterproof and moisture permeable resin layer may be fine porous resin film or non-porous resin film. The waterproof and moisture permeable resin layer generally consists of single resin film, but rarely two or more resin films. For example, two fine porous resin films, two non-porous resin films or one fine porous resin film and one non-porous resin films may be laminated to form the waterproof and moisture permeable resin layer. In the case of using the waterproof and moisture permeable resin as the resin in the foamed layer, it is suitable to use same waterproof and moisture permeable resin as the resin of the protective layer.

The waterproof and moisture permeable resin layer is preferably 10∼100µm, more preferably 15∼70µm in thickness, when it is the fine porous resin film. If it is less than 10µm, the layer is insufficiently to waterproof. If it is more than 100µm, the layer is hard and insufficiently to moisture permeability. The waterproof and moisture permeable.resin layer is preferably 5∼30µm, more preferably 8∼20µm in thickness, when it is the non porous resin film. If it is less than 5µm, the layer is insufficiently to waterproof. If it is more than 30pm, the layer is insufficiently to moisture permeability. In the case of using the non porous resin film, it is possible to thin the waterproof and moisture permeable resin layer. Moreover, it is easy to foam the layer which contains the heat expansible micro capsules. Furthermore, it is easy to view the foamed layer from the outside. Making up the foamed layer by containing the pigment and filler etc. in it, it is possible to view the made up foamed layer.

The waterproof and moisture permeable resin layer may be a laminated layer of the fine porous polyurethane film and a barrier layer. The fine porous polyurethane film may be obtained by wet-coagulating a polyurethane resin solution containing N,N-dimethylformamide as main solvent. The barrier layer is a polyurethane thin film to prevent N,N-dimethylformamide to permeate. Therefore, the barrier layer is laminated on the surface of the foamed layer. That is, when the fine porous polyurethane film is formed by applying the polyurethane resin solution on the synthetic resin layer, the barrier layer is laminated on the synthetic resin layer to prevent that the N,N-dimethylformamide as main solvent permeates into the synthetic resin layer. If the barrier layer is not existent, the N,N-dimethylformamide may permeate into the synthetic resin layer, and the wall of the heat expansible micro capsule may be solved. As the polyurethane resin to form the polyurethane thin film, well-known above-mentioned polyurethane resins are used. The barrier layer may be laminated on all area of the fabric. In the case that the foamed layer is laminated at pattern, the barrier layer may be laminated only on the patterned foamed layer. That is, the barrier layer may be synchronously laminated on the patterned foamed layer. The barrier layer is preferably 0.5∼10µm, more preferably 1∼8µm in thickness. If it is less than 0.5µm, it tends to permeate the N,N-dimethylformamide. If it is more than 10µm, it tends to harden the fabric.

The fine porous polyurethane film is obtained by conventional wet-coagulation process. That is, after the polyurethane resin solution containing N,N-dimethylformamide as main solvent is applied on the barrier layer, the polyurethane resin is coagulated by dipping in water or water solution containing a few N,N-dimethylformamide. The fine porous polyurethane film may contain filler such as titanium dioxide, calcium carbonate and etc., organic or inorganic pigment, slipping agent such as silicon dioxide and etc., deodorant of zeolite, antibacterial agent of titanium oxide having photo catalyst activity and etc..

The fine porous polyurethane film may be preferably 5~200 µm, more preferably 10∼100µm in thickness. If the thickness is less than 5 µm, the obtained fabric may be lack of volume or durability. If the thickness is more than 200 µm, the obtained fabric may be expensive. The pore ratio of the fine porous polyurethane film may be preferably 20~80%, more preferably 40~70%. If the pore ratio is less than 20%, the moisture permeability may be insufficient. If the pore ratio is more than 80%, the strength of the polyurethane fine porous polyurethane film tends to lower. The pore ratio is calculated by the following method. {[1-the applied weight of dry resin(the applied weight per 1 square meter)]/[average thickness of film (µm) × 1.2(specific gravity of polyurethane)] × 100 }.

### Explanation of surface layer on protective layer

A surface layer may be more arranged on the protective layer in the invention. The surface layer may be arranged to give more wash resistance, waterproof or water repellent to the obtained fabric. Therefore, the material of the surface layer may be decided in accordance with the property that is needed to it. For example, it is used as the material to be durable films, waterproof agents, or water repellent agents and etc.. Generally, the surface layer may be a resin film. In this case, the resin of the film may be same resin as the resin of the foamed layer or the protective layer. In the case that the waterproof and moisture permeable resin layer exposes and directly contacts to the part of human body or underwear, and is rubbed, the surface layer which has slip property and is superior to sense of touch as soft touch or dry touch may be arranged. Concretely, it is arranged on the surface of the waterproof and moisture permeable resin layer to be silicone compound such as polydimethylsiloxane and etc., silk powders such as sericin and etc., amino acid fine powders such as N^{e} lauroyl-L-lysine and etc., wool powders, cellulose powders, fine powders of heat resistant organic filler.

The fabric having a foamed layer is produced by the following methods.

### Basic method

It is prepared to be the first synthetic resin solution which is obtained by solving or dispersing the synthetic resin in water and/or organic solvent. The second synthetic resin solution is obtained by adding and mixing the heat expansible micro capsules and the silica fine powders in the first synthetic resin solution. It is above-mentioned to be mass parts and kind of the synthetic resin, adding mass parts and kind of the heat expansible micro capsules and adding mass of the silica fine powders. The second synthetic resin solution is applied on the one side surface of the fabric material. The second synthetic resin solution may be applied all over or at pattern on the one side surface. It is used as the method of the applying to be a method of comma coating, roll on knife coating, gravure coating, screen printing and etc.. The synthetic resin solution layer after applying is solidified by drying the second synthetic resin solution. The solidified synthetic resin layer may be preferably about 5~200 µm, more preferably about 10∼100 µm in thickness. The cross-linkable synthetic resin may be or not yet be cross-linked at this time, in the case that the synthetic resin is cross-linkable. The heat expansible micro capsules are expanded by heating at about 80~200°C after forming the synthetic resin layer by solidifying. By the above-mentioned method, the foamed layer is forming and the fabric having the foamed layer is obtained.

### Method of the case of adding protective laver

It is suitable to laminate the protective layer before expanding the heat expansible micro capsules, after forming the synthetic resin layer by solidifying, in the above-mentioned basic method. It is voluntary used as the protective layer to be the above-mentioned waterproof and moisture permeable resin layer and etc.. The method of forming the protective layer is various in accordance with kind of it. For example, when the protective layer is a resin layer, a fabric, a paper or etc., it may be adhered on the surface of the synthetic resin layer by an adhesive or etc.. Moreover, when the protective layer is the resin layer, it is adhere by adhesion of itself with extruding the synthetic resin at a sheet by a T-die or etc.. When using the resin solution for forming the protective layer such as the polyurethane resin solution and etc., it is dried to solidify after applying by the method of knife coating, gravure coating, or etc., and the protective layer of the resin layer may be formed. When the protective layer is synchronously laminated on a patterned synthetic resin layer, using the resin solution for forming the protective layer, the protective layer of the resin layer may be formed by the printing method with rotary screen, flat screen and etc.. The heat expansible micro capsules are expanded by heating at about 80~200°C after forming the protective layer. By the above-mentioned method, the fabric in which the protective layer is laminated on the foamed layer is obtained.

### Method of the case of using the layer which fine porous polyurethane film and barrier layer are laminated as the protective layer

It is prepared to be the first synthetic resin solution which is obtained by solving or dispersing the polyurethane resin in water and/or organic solvent. The second synthetic resin solution is obtained by adding and mixing the heat expansible micro capsules and the silica fine powders in the first synthetic resin solution. It is above-mentioned to be mass parts and kind of the polyurethane resin, adding mass parts and kind of the heat expansible micro capsules and adding mass of the silica fine powders. The second synthetic resin solution is applied on the one side surface of the fabric material. The second synthetic resin solution may be applied all over or at pattern on the one side surface. The synthetic resin solution layer after applying is solidified by drying the second synthetic resin solution to form the synthetic resin layer.

A barrier layer is laminated on the surface of the synthetic resin layer. The method of forming the barrier layer is various in accordance with kind of it. For example, when using the polyurethane thin film, it may be adhered on the surface of the synthetic resin layer by an adhesive or etc.. When using the polyurethane resin solution, it is dried to solidify after applying by the method of floating knife coating, reverse coating, gravure coating, or etc., and the polyurethane thin film may be formed. When the barrier layer is synchronously laminated on a patterned synthetic resin layer, using the polyurethane resin solution, the barrier layer of the polyurethane thin film may be formed by the printing method with rotary screen, flat screen and etc..

The polyurethane resin solution containing N,N-dimethylformamide as main solvent is applied on the surface of the barrier layer after forming it. It may be used as the method of the applying to be a method of comma coating, roll on knife coating and etc.. The polyurethane resin is coagulated by dipping in water at 5~40°C or water solution at 5~40°C containing a few N,N-dimethylformamide. After coagulation, it is washed in hot water at 40~80°C and dried, and the fine porous polyurethane film is obtained. The fabric which is superior to waterproof and moisture permeability is obtained by having the fine porous polyurethane film.

### Method of the case of using release sheet

It is prepared to be a release sheet such as a release paper, a release film, a release fabric and etc.. The protective layer of the waterproof and moisture permeable resin layer is formed on the surface of the release sheet. It may be used to be the above-mentioned waterproof and moisture permeable resin and the above-mentioned method to form the waterproof and moisture permeable resin layer. For example, it may be used to be a method of dry coating to form the non-porous resin film by applying a resin solution for forming a waterproof and moisture permeable resin layer with a comma coater, knife coater and etc., and by drying. Moreover, it may be used to be a method of wet coating to form the fine porous resin film by same applying a resin solution for forming a waterproof and moisture permeable resin layer, and by coagulating in water and etc. which is liquid to coagulate the resin, and by washing and drying. Furthermore, it may be used to be a method of extrusion to form non-porous resin film by extruding the above-mentioned melting resin for forming the waterproof and moisture permeable resin layer from a T-die.

It is applied to be the synthetic resin solution which contains the heat expansible micro capsules and the silica fine powders on the waterproof and moisture permeable resin layer after forming it. It is above-mentioned to be mass parts and kind of the synthetic resin, mass parts and kind of the heat expansible micro capsules and mass of the silica fine powders. The synthetic resin solution is applied on the surface of the waterproof and moisture permeable resin layer. The synthetic resin solution may be applied all over or at pattern on the surface of the waterproof and moisture permeable resin layer. It is used as the method of the applying to be a method of comma coating, roll on knife coating, gravure coating, screen printing and etc.. The synthetic resin solution layer after applying is solidified by drying the synthetic resin solution. The cross-linkable synthetic resin may be or not yet be cross-linked at this time, in the case that the synthetic resin is cross-linkable. By the above-mentioned method, the synthetic resin layer is solidified to be formed.

The synthetic resin layer and the fabric material are laminated with an adhesive layer. The kind of the adhesive is above-mentioned. The adhesive layer is formed as the followings. For example, it may be formed by that the adhesive solution of emulsion type or solvent type is applied all over or at dots on the synthetic resin layer or the fabric material with a comma coater, knife coater and etc. and is dried. Moreover, in the case that the adhesive agent is a hot-melt adhesive agent, a molten adhesive agent may be applied all over or at dots on the synthetic resin layer or the fabric material with a T-die, gravure coater or etc. and be hardened by cooling. In the case that the synthetic resin layer is formed at pattern, if the adhesive layer is formed on the synthetic resin layer, the adhesive layer is extent on the waterproof and moisture permeable resin layer out of the pattern.

By the above method, it is obtained to be laminated in order of the waterproof and moisture permeable resin layer, the synthetic resin layer, the adhesive layer and the fabric material. By heating after that, the heat expansible micro capsules in the synthetic resin layer are expanded, and the synthetic resin layer becomes to the foamed layer. The heat expansible micro capsules can be sufficiently expanded without preventing heat-expansion because they are with the silica fine powders in the synthetic layer, and the foamed layer is obtained in the invention. By the above-mentioned method, the waterproof and moisture permeable fabric having the foamed layer is obtained in the invention.

### Other application

It is above described as a main to laminate the foamed layer to the fabric material, but the fabric material may be replaced with a synthetic resin sheet or film, a paper and an other base sheet. The invention is utilized to various base sheets without limiting to the fabric material because the invention is most characterized with the method of foaming. The method of foaming in the invention is comprising of applying synthetic resin solution which contains the heat expansible micro capsules and the silica fine powders each of which is hydrophilic and fine porous on the base sheet, forming a synthetic resin layer by drying the applied synthetic resin solution, and expanding the heat expansible micro capsules by heating the synthetic resin layer. Therefore, it can be obtained to be various articles which are three dimensional.

### Effect of the invention

The heat expansible micro capsules can be sufficiently expanded by heating because of using the synthetic resin solution which contains the heat expansible micro capsules and the silica fine powders each of which is hydrophilic and fine porous. This reason is guessed by the inventors as the following. That is, the inventors guess that the heat expansible micro capsules are unevenly distributed and are partially dense condition, when mixing only the heat expansible micro capsules in the synthetic resin solution and applying the solution on the one surface of the fabric material. On the other hand, the inventors guess that the heat expansible micro capsules are uniformly distributed and are spreadable condition, when mixing the heat expansible micro capsules with the silica fine powders in the synthetic resin solution. Thereby, the inventors guess that the heat expansible micro capsules can be smoothly expanded because they are in free condition.

Therefore, it is high-foamed and sufficient in three dimensionality to be the foamed layer which is obtained by using the synthetic resin solution which contains the heat expansible micro capsules and the silica fine powders. The fabric having the foamed layer has high value-added as a wear material because of being superior to three dimensionality, fashion and design.

In the case of forming the barrier layer on the surface of the synthetic resin layer which contains the heat expansible micro capsules, the silica fine powders and polyurethane resin, it is applied on the surface of the barrier layer to be a polyurethane resin solution containing N,N-dimethylformamide as main solvent. Therefore, the barrier layer prevents that the N,N-dimethylformamide permeates into the synthetic resin layer and the walls of the heat expansible micro capsules dissolve in the N,N-dimethylformamide. As the result, the heat expansible micro capsules are sufficiently expanded by heating after the fine porous polyurethane film is formed with wet-coagulating the polyurethane resin solution.

### Example

The invention is described on the basis of the following examples. However, the invention is not limited to the examples. The invention shall be determined on the basis of the discovery which is not to prevent the expansion of the heat expansible micro capsules when mixing them with the silica fine powders in the resin layer.

### Example 1

### [Preparation of the fabric material]

A taffeta was woven with 110 warps/2.5 cm and 95 wefts/2.5 cm. The warp and the weft were both consisted of a nylon multi-filament which was 78 decitexes/48 filaments. The taffeta was scoured and dyed in 1% o.m.f. of Kayanol Blue NR sold by Nippon Kayaku Co., Ltd. with a conventional method. The taffeta was dipped in the following water dispersion, padded at 30% in pick up, dried and heat-treated at 170°C through 1 minute. The water dispersion contained 6% by mass of Asahi-Guard AG-7000 sold by Asahi Glass Co., Ltd. as emulsion of fluorinated water repellent agent, 0.3% by mass of Sumitex Resin M-3 sold by Sumika Chemtex Co., Ltd. as melamine resin, 0.1% by mass of Sumitex Accelerator sold by same company as catalyst for the tri methylol melamine resin.

After that, the taffeta was passed at 30m/min. in speed through a pair of calender rolls having a specular roll at 170°C and 300kPa in pressure, and the surface of the taffeta was closed. By the above-mentioned method, the fabric material used in the examples was prepared.

### [Preparation of the synthetic resin solution]

On the other hand, it was prepared to be the synthetic resin solution which was consisted of the following <Recipe 1>. The viscosity of the synthetic resin solution was 3000mPa·s under 25°C.

### <Recipe 1>

| | |
|---|---|
| Elastron E-37 | 100 parts by mass |
| (Water solution containing 25% by mass of water soluble polyurethane resin having block isocyanate group , sold by Dai-Ichi Kogyo Seiyaku Co., Ltd.) | |
| Elastron CAT-21 | 2 parts by mass |
| (Catalyst for Elastron E-37, sold by Dai-Ichi Kogyo Seiyaku Co., Ltd.) | |
| Microsphere H750D | 3 parts by mass |
| (Heat expansible micro capsules of which an average particle size was about 25 µ m and a temperature for expanding was 140~170°C, sold by Dainichiseika Color & Chemicals Mfg. Co., Ltd.) | |
| Nipsil E-200 | 3 parts by mass |
| (Silica fine powders which were obtained by sedimentation process and of which an average particle size was about 3.5µm and each of which was hydrophilic and fine porous, sold by Nippon Silika Industry K.K.) | |
| DKS Finegum HE-SS 4% by mass in water | 30 parts by mass |
| (Sizing agent as viscosity agent, sold by Dai-Ichi Kogyo Seiyaku Co., Ltd.) | |
| Isopropyl alcohol | 5 parts by mass |

### [Preparation of the resin solution for forming the protective layer]

It was prepared to be the resin solution for forming the protective layer which was consisted of the following <Recipe 2>. The viscosity of the resin solution was 1000mPa · s under 25°C.

### <Recipe 2>

| | |
|---|---|
| Elastron E-37 | 100 parts by mass |
| (Water solution containing 25% by mass of water soluble polyurethane resin having block isocyanate group , sold by Dai-Ichi Kogyo Seiyaku Co., Ltd.) | |
| Elastron CAT-21 | 2 parts by mass |
| (Catalyst for Elastron E-37, sold by Dai-Ichi Kogyo Seiyaku Co., Ltd.) | |
| DKS Finegum HE-SS 4% by mass in water | 10 parts by mass |
| (Sizing agent as viscosity agent, sold by Dai-Ichi Kogyo Seiyaku Co., Ltd.) | |
| Isopropyl alcohol | 2 parts by mass |

### [Forming the synthetic layer on the one side surface of the fabric material]

The synthetic resin solution of the <Recipe 1> was applied on the one side surface (closed surface) of the above fabric material with a gravure roll. The all surface of the gravure roll was engraved with lattice shape. A density of lines of the lattice was 18 lines/2.5 cm. A depth of the line was 150µm. The area for applying was 40% area per the all surface of the gravure roll. After applying, it was formed that the synthetic resin layer was about 20µm in thickness and was lattice pattern by drying at 130°C through 1 minute. Then, the polyurethane resin was almost cured by cross-linked, but the heat expansible micro capsules were not yet expanded.

### [Forming the protective layer on the synthetic resin layer]

The resin solution for forming the protective layer of the <Recipe 2> was applied on the all surface of the synthetic layer at applied weight 10 g/m² with a knife coater. It was formed to be the protective layer which was about 3µm in thickness after drying at 130°C through 40 seconds.

### [Forming the foamed layer]

After forming the protective layer, it was heated at 170°C through 1 minute to expand the heat expansible micro capsules. By the above-mentioned method, the fabric having the foamed layer was obtained.

### Example 2

The fabric having the foamed layer was obtained with the same method of the Example 1 except that the [Forming the protective layer on the synthetic resin layer] was not used.

### Comparative Example 1

The fabric having the foamed layer was obtained with the same method of the Example 1 except that the Nipsil E-200 in the <Recipe 1> was not used.

The following items were graded and measured on the following graduations for the fabrics of the Example 1, 2 and the Comparative Example 1. The results were shown in Table 1.

### (1) Three dimensionality and Attractivity

The three dimensionality and attractivity (clearness or vividness) were graded on the following four graduations by visualization.
⓪ · · · The three dimensionality was very superior and the attractivity was good.
O · · · The three dimensionality and attractivity was good.
Δ · · · The attractivity was good but the three dimensionality was inferior.
× · · · The three dimensionality and attractivity were inferior. The foamed layer was same as a conventional synthetic resin film.

### (2) Durability of the three dimensionality and attractivity

The transformation of the three dimensionality and etc. was graded on the following three graduations after 20 times of washing (JIS L-0217, method of 103).
○ · · · Hardly not transformation
Δ · · · A few transformation
× · · · large transformation

### (3)Peeling strength (N/2.5cm)

The strength was measured when the foamed layer was peeled from the fabric material in the direction of the warp on the basis of the method described in JIS L-1089.

### (4)Abrasive resistance

It was rubbed 100 times to be the surface of the side in which the foamed layer was formed on the basis of the method described in JIS L-0849. The surface of the side means on the surface of the foamed layer when the protective layer was not existent, and it means on the surface of the protective layer when the protective layer was existent. After rubbing, the abrasive resistance was graded on the following three graduations by observing the transformation of the three dimensionality and attractivity on the abraded surface.
○ · · · Hardly not transformation
Δ · · · A few transformation
× · · · large transformation

### (5)Fabric hand

The fabric hand was graded the following three graduations by handling for the fabric having the foamed layer.
○ · · · Soft
Δ · · · Normal
× · · · Hard

**[Table 1]**

| | Example 1 | Example 2 | Com.Example 1 |
|---|---|---|---|
| Three dimensionality and Attractivity | ⓪ | ⓪ | Δ |
| Durability of the three dimensionality and attractivity | ○ | × | ○ |
| Peeling strength (N/2.5cm) | 15.5 | 15.1 | 9.3 |
| Abrasive resistance | ○~Δ | × | ○~Δ |
| Fabric hand | ○ | ○ | ○ |

As shown in the table 1, while the fabrics in the examples were superior to the three dimensionality and attractivity, the fabric in the comparative example was inferior to it. The Example 2 was inferior to the abrasive resistance and the durability of the three dimensionality and attractivity because of not forming the protective layer.

It was observed to be the cross section of the foamed layer obtained in the Example 1, 2 and the Comparative Example 1 with an optical microscope at magnification of 140. In the foamed layer of the Example 1, it was remarkably observed that the expanded micro capsules to 50∼90 µm in particle size pushed up the protective layer on the surface of the foamed layer. In the foamed layer of the Example 2, the expanded micro capsules to 50~100 µm in particle size were remarkably observed on the surface of the foamed layer. In the foamed layer of the Comparative Example 1, the expanded micro capsules to 30∼80 µm in particle size were uniformly observed on the both surface of the foamed layer, but did not push up the protective layer.

### Example 3

The same fabric material in the Example 1 was prepared. On the other hand, it was prepared to be the synthetic resin solution which was consisted of the following <Recipe 3>. The viscosity of the synthetic resin solution was 3000mPa · s under 25°C.

### <Recipe 3>

| | |
|---|---|
| Himuren Y- 128NS | 100 parts by mass |
| (2-liquid and solvent type solution containing 26% by mass of polyurethane, sold by Dainichiseika Color & Chemicals Mfg. Co., Ltd.) | |
| Rezamin X Cross-linking agent | 2 parts by mass |
| (Cross-linking agent of hexamethylene diisocyanate, sold by Dainichiseika Color & Chemicals Mfg. Co., Ltd.) | |
| Microsphere H750D | 4 parts by mass |
| (Heat expansible micro capsules of which an average particle size was about 25 µm and a temperature for expanding was 140~170°C, sold by Dainichiseika Color & Chemicals Mfg. Co., Ltd.) | |
| Silica powder RA (B70) | 5 parts by mass |
| (Silica fine powders which were obtained by gel process and of which an average particle size was about 70pm and each of which was hydrophilic and fine porous, sold by Fuji Silysia Chemical Ltd.) | |
| Methyl ethyl ketone | 15 parts by mass |
| Toluene | 15 parts by mass |

It was prepared to be the resin solution for forming the protective layer which was consisted of the following <Recipe 4>. The viscosity of the resin solution was 15000mPa · s under 25°C.

### <Recipe 4>

| | |
|---|---|
| Rezamin CU 4821 | 100 parts by mass |
| (Solution containing 25% by mass of polyurethane which was ester-type, sold by Dainichiseika Color & Chemicals Mfg. Co., Ltd.) | |
| Calcium carbonate (#400) | 7 parts by mass |
| (Sold by Nitto Funka Kogyo K.K.) | |
| Rezamin X Cross-linking agent | 1 parts by mass |
| (Cross-linking agent of hexamethylene diisocyanate, sold by Dainichiseika Color & Chemicals Mfg. Co., Ltd.) | |
| Dilac colour L-1500 | 5 parts by mass |
| (White colorant, sold by DIC Corporation) | |
| N,N-dimethylformamide | 30 parts by mass |

### [[Forming the synthetic layer on the one side surface of the fabric material]

The synthetic resin solution of the <Recipe 3> was applied on the one side surface (closed surface) of the above fabric material used in the Example 1 with a gravure roll. The all surface of the gravure roll was engraved with many dots. A shape of each dot was circular and 0.7mm in diameter. A space among neighbor dots was 0.35mm. A depth of the dot was 200pm. The area for applying was about 40% area per the all surface of the gravure roll. After applying, it was formed that the synthetic resin layer was about 25µm in thickness and was dots pattern by drying at 130°C through 1 minute. The obtained synthetic resin layer was aged at 40°C through 3 days. Then, the polyurethane resin was almost cured by cross-linked, but the heat expansible micro capsules were not yet expanded.

### [Forming the protective layer on the synthetic resin layer]

After aging, the resin solution for forming the protective layer of the <Recipe 4> was applied on the all surface (including the area on which the dots were not existent) of the synthetic resin layer at applied weight 130g/m² with a comma coater. And immediately, it was dipped through 1 minute in water at 20°C to coagulate the resin. It was formed that the protective layer was 55µm in thickness by drying at 130°C through 2 minutes after washing through 5 minutes in hot water at 50°C. The protective layer consisted of a waterproof and moisture permeable resin layer.

### [Forming the foamed layer]

After forming the protective layer, it was heated at 170°C through 1 minute to expand the heat expansible micro capsules. By the above-mentioned method, the fabric having the foamed layer was obtained.

### Example 4

It was prepared to be the resin solution for forming the surface layer which was consisted of the following <Recipe 5>. The viscosity of the resin solution was 5000mPa·s under 25°C.

### <Recipe 5>

| | |
|---|---|
| Luckskin U 2524 | 100 parts by mass |
| (Solvent type polyurethane solution, sold by Seikoh Chemicals Co.,Ltd.) | |
| Luckskin U 2525M | 50 parts by mass |
| (Solvent type polyurethane solution for mat agent, sold by Seikoh Chemicals Co.,Ltd.) | |
| Toluene | 10 parts by mass |
| Isopropyl alcohol | 10 parts by mass |

The resin solution of the <Recipe 5> was applied on the surface of the protective layer at applied weight 25 g/m² with a knife coater before the formation of the foamed layer after the formation of the protective layer in the Example 3. It was formed that the surface layer was about 5µm in thickness after drying at 100°C through 2 minutes. After that, the heat expansible micro capsules in the synthetic resin layer were expanded by heating at 170°C through 1 minute. By the above-mentioned method, the fabric having the foamed layer was obtained.

### Comparative Example 2

The fabric having the foamed layer was obtained with the same method of the Example 3 except that the Silica powder RA (B70) in the <Recipe 3> was not used.

### Comparative Example 3

The fabric having the foamed layer was obtained with the same method of the Example 4 except that the Silica powder RA (B70) in the <Recipe 3> was not used.

The above items (1) to (5) were graded and measured for the fabrics of the Example 3, 4 and the Comparative Example 2, 3. Moreover, the following items (6) and (7) were measured on the following method. The results were shown in Table 2.

### (6)Water penetration pressure (kPa)

The pressure was measured on the basis of the method of high water pressure described in JIS L-1092.

### (7)Moisture permeability (g/m² · 24hrs)

The moisture permeability was measured on the basis of the A-1 method described in JIS L-1099.

**[Table 2]**

| | Ex.3 | Ex.4 | Com.Ex.2 | Com.Ex.3 |
|---|---|---|---|---|
| Water penetration pressure | 105 | 251 | 98 | 240 |
| Moisture permeability | 6400 | 4608 | 6280 | 4512 |
| Three dimensionality and Attractivity | ⓪ | ⓪ | Δ | Δ |
| Durability of the three dimensionality and attractivity | ○ | ○ | ○ | ○ |
| Peeling strength (N/2.5cm) | 16.2 | 16.8 | 13.5 | 14.7 |
| Abrasive resistance | ○ | ○ | ○ | ○ |
| Fabric hand | ○ | ○~Δ | ○ | Δ |

As shown in the table 2, while the fabrics in the examples were superior to the three dimensionality and attractivity, the fabrics in the comparative examples were inferior to it.

It was observed to be the cross section of the foamed layer obtained in the Example 3, 4 and the Comparative Example 2, 3 with an optical microscope at magnification of 140. In the foamed layer of the Example 3, it was remarkably observed that the expanded micro capsules to 50∼90µm in particle size pushed up the protective layer on the surface of the foamed layer. In the foamed layer of the Example 4, it was remarkably observed that the expanded micro capsules to 40∼90µm in particle size pushed up the protective layer on the surface of the foamed layer. In the foamed layer of the Comparative Example 2 and 3, the expanded micro capsules to 30∼80µm in particle size were uniformly observed on the both surface of the foamed layer, but did not push up the protective layer.

### Example 5

The same fabric material in the Example 1 was prepared. On the other hand, it was prepared to be the synthetic resin solution which was consisted of the following <Recipe 6>. The viscosity of the synthetic resin solution was 2000mPa·s under 25°C.

### <Recipe 6>

| | |
|---|---|
| Himuren Y-128NS | 100 parts by mass |
| (2-liquid and solvent type solution containing 26% by mass of polyurethane, sold by Dainichiseika Color & Chemicals Mfg. Co., Ltd.) | |
| Rezamin X Cross-linking agent | 2 parts by mass |
| (Cross-linking agent of hexamethylene diisocyanate, sold by Dainichiseika Color & Chemicals Mfg. Co., Ltd.) | |
| Microsphere H750D | 4 parts by mass |
| (Heat expansible micro capsules of which an average particle size was about 25 µm and a temperature for expanding was 140~170°C, sold by Dainichiseika Color & Chemicals Mfg. Co., Ltd.) | |
| Silica powder RA (B70) | 5 parts by mass |
| (Silica fine powders which were obtained by gel process and of which an average particle size was about 70pm and each of which was hydrophilic and fine porous, sold by Fuji Silysia Chemical Ltd.) | |
| Methyl ethyl ketone | 25 parts by mass |
| Toluene | 30 parts by mass |

### [Forming the synthetic layer on the one side surface of the fabric material]

The synthetic resin solution of the <Recipe 6> was applied on the one side surface (closed surface) of the above fabric material used in the Example 1 with a knife coater. The clearance of the knife coater was 200pm. After applying, it was formed that the synthetic resin layer was uniform and about 70µm in thickness after drying at 130°C through 1 minute. The obtained synthetic resin layer was aged at 40°C through 3 days. Then, the polyurethane resin was almost cured by cross-linked, but the heat expansible micro capsules were not yet expanded.

### [Forming the foamed layer]

After forming the synthetic layer, it was heated at 170°C through 1 minute to expand the heat expansible micro capsules. By the above-mentioned method, the fabric having the foamed layer was obtained.

### Example 6

The fabric having the foamed layer was obtained with the same method of the Example 5 except using Silysia 310P (Trade Mark) instead of the Silica powder RA (B70) in the <Recipe 6>. The Silysia 310P was silica fine powders which were obtained by gel process and of which an average particle size was about 1.4µm and each of which was hydrophilic and fine porous, sold by Fuji Silysia Chemical Ltd..

### Example 7

The fabric having the foamed layer was obtained with the same method of the Example 5 except using Silysia 430 (Trade Mark) instead of the Silica powder RA (B70) in the <Recipe 6>. The Silysia 430 was silica fine powders which were obtained by gel process and of which an average particle size was about 2.5µm and each of which was hydrophilic and fine porous, sold by Fuji Silysia Chemical Ltd..

### Example 8

The fabric having the foamed layer was obtained with the same method of the Example 5 except using Silysia 470 (Trade Mark) instead of the Silica powder RA (B70) in the <Recipe 6>. The Silysia 470 was silica fine powders which were obtained by gel process and of which an average particle size was about 12µm and each of which was hydrophilic and fine porous, sold by Fuji Silysia Chemical Ltd..

### Example 9

The fabric having the foamed layer was obtained with the same method of the Example 5 except using Nipsil AZ-200 (Trade Mark) instead of the Silica powder RA (B70) in the <Recipe 6>. The Nipsil AZ-200 was silica fine powders which were obtained by gel process and of which an average particle size was about 2pm and each of which was hydrophilic and fine porous, sold by Nippon. Silika Industry K.K..

### Example 10

The fabric having the foamed layer was obtained with the same method of the Example 5 except using MP silica (Trade Name) instead of the Silica powder RA (B70) in the <Recipe 6>. The MP silica was silica fine powders each of which was hydrophilic and fine porous, sold by Mitsubishi Chemical Corporation.

### Comparative Example 4

The fabric having the foamed layer was obtained with the same method of the Example 5 except that the Silica powder RA (B70) in the <Recipe 6> was not used.

### Comparative Example 5

The fabric having the foamed layer was obtained with the same method of the Example 5 except using Sylophobic 702 (Trade Mark) instead of the Silica powder RA (B70) in the <Recipe 6>. The Sylophobic 702 was silica fine powders which were obtained by gel process and of which an average particle size was about 4µm and each of which was hydrophobic and fine porous, sold by Fuji Silysia Chemical Ltd..

### Comparative Example 6

The fabric having the foamed layer was obtained with the same method of the Example 5 except using fine powders of calcium carbonate (reagent; an average particle size was less than about 5µm) instead of the Silica powder RA (B70) in the <Recipe 6>.

### Comparative Example 7

The fabric having the foamed layer was obtained with the same method of the Example 5 except using Iriodin 110 (Trade Mark) instead of the Silica powder RA (B70) in the <Recipe 6>. The Iriodin 110 was mica fine powders of which an average particle size was less than about 15µm and each of which was enveloped by titanium dioxide, sold by Merck Ltd., Japan.

### Comparative Example 8

The fabric having the foamed layer was obtained with the same method of the Example 5 except using Iriodin 220 (Trade Mark) instead of the Silica powder RA (B70) in the <Recipe 6>. The Iriodin 220 was mica fine powders of which particle sizes were the range of 10µm to 60µm and each of which was enveloped by titanium dioxide, sold by Merck Ltd., Japan.

It was measured to be thickness of each fabrics of the Example 5~10 and the Comparative Example 4~8 with a peacock needle. The results were shown in Table 3. The fabric material prepared in the Example 1 was 100µm in thickness when measuring with the peacock needle.

**[Table 3]**

| | The thickness of the fabric |
|---|---|
| Example 5 | 230 *µ*m |
| Example 6 | 190 *µ*m |
| Example 7 | 195 *µ*m |
| Example 8 | 19*5 µm* |
| Example 9 | 18*5 µm* |
| Example 10 | 200 *µ*m |
| Comparative Example 4 | 170 *µ*m |
| Comparative Example 5 | 175 *µ*m |
| Comparative Example 6 | 170 *µ*m |
| Comparative Example 7 | 165 *µ*m |
| Comparative Example 8 | 170 *µ*m |

As shown in the table 3, while the foamed layer of the Example 5~10 using silica fine powders each of which was hydrophilic and fine porous was superior to the foamability, the foamed layer of the Comparative Example 4 ~8 not using silica fine powders each of which was hydrophilic and fine porous was inferior to the foamability. Concretely, each thickness of the fabrics of the Examples was thicker more than 15µm in comparison with the thickness of the fabric of the Comparative Example 4 without silica fine powders. Therefore, the heat expansible micro capsules were sufficiently expanded in the Examples. On the other hand, the thickness of the fabrics of the Comparative Examples was thicker 5µm even in maximum. Therefore, it was prevented to expand the heat expansible micro capsules.

### Example 11

The same fabric material in the Example 1 was prepared. Moreover, it was prepared to be the synthetic resin solution which was consisted of the <Recipe 3>.

### [Preparation of the polyurethane resin solution for forming the barrier layer]

It was prepared to be the polyurethane resin solution for forming the barrier layer which was consisted of the following <Recipe 7>. The viscosity of the resin solution was 5000mPa · s under 25°C.

### <Recipe 7>

| | |
|---|---|
| Himuren Y- 128NS | 100 parts by mass |
| (Solvent type solution containing 25% by mass of polyurethane, sold by Dainichiseika Color & Chemicals Mfg. Co., Ltd.) | |
| Rezamin X Cross-linking agent | 1 parts by mass |
| (Diisocyanate, sold by Dainichiseika Color & Chemicals Mfg. Co., Ltd.) | |
| Methyl ethyl ketone | 15 parts by mass |
| Toluene | 15 parts by mass |
| Water | 30 parts by mass |

### [Preparation of the polyurethane resin solution for forming the fine porous polyurethane film]

It was prepared to be the polyurethane resin solution (for forming the protective layer) which was consisted of the <Recipe 4> used in the Example 3. The polyurethane resin solution was for forming the fine porous polyurethane film.

### [Forming the synthetic layer on the one side surface of the fabric material]

The resin solution of the <Recipe 3> was applied on the all surface (closed surface) of the one side of the fabric material at applied weight 120g/m² with a comma coater. And, it was formed to be the synthetic layer which was 25µm in thickness after drying at 120°C through 2 minutes.

### [Forming the barrier layer on the synthetic layer]

The polyurethane resin solution of the <Recipe 7> was applied on the all surface of the synthetic resin layer at applied weight 50g/m² with a floating knife coater. It was formed to be the barrier layer which was 7pm in thickness after drying at 120°C through 1 minute.

### [Forming the fine porous polyurethane film on the barrier layer]

After that, the polyurethane resin solution of the <Recipe 4> was applied on the all surface of the barrier layer at applied weight 120g/m² (dry resin weight 30g/m²) with a comma coater. And immediately, it was dipped through 1 minute in water at 20°C to coagulate the polyurethane resin. It was formed that the fine porous polyurethane film was 55µm in thickness by drying at 130°C through 2 minutes after washing through 5 minutes in hot water at 50°C. The pore ratio of the fine porous polyurethane film was 55%.

### [Forming the foamed layer]

After forming the protective layer of laminating the polyurethane fine porous film to the barrier layer, it was heated at 170°C through 1 minute to expand the heat expansible micro capsules in the synthetic layer. By the above-mentioned method, the fabric having the foamed layer was obtained.

### Example 12

The fabric having the foamed layer was obtained with the same method of the Example 11 except of modifying the above [Forming the synthetic layer on the one side surface of the fabric material] and [Forming the barrier layer on the synthetic layer] as the followings.

### [Forming the synthetic layer on the one side surface of the fabric material]

The synthetic resin solution of the <Recipe 3> was applied on the one side surface (closed surface) of the above fabric material at applied weight 30g/m² with a gravure roll in 18 meshes. The all surface of the gravure roll was engraved with many dots as 18 meshes. A shape of each dot was circular and 0.75mm in diameter. A space among neighbor dots was 0.65mm. A depth of the dot was 0.2mm. The all area for engraved dots was about 20% area per the all surface of the gravure roll. After applying, it was formed that the dot pattern synthetic resin layer was about 40µ m in thickness, that is, the thickness of the dots was 40µm after drying at 120°C through 2 minute.

### [Forming the barrier layer on the synthetic layer]

The polyurethane resin solution of the <Recipe 7> was applied on the all surface (including the area on which the dot pattern was not existent) of the dot pattern synthetic resin layer at applied weight 20g/m² with a floating knife coater. It was formed to be the barrier layer which was 3µm in thickness after drying at 120°C through 2 minutes.

### Comparative Example 9

The fabric having the foamed layer was obtained with the same method of the Example 11 except that the Silica powder RA (B70) in the <Recipe 3> was not used.

### Comparative Example 10

The fabric having the foamed layer was obtained with the same method of the Example 11 except that the Silica powder RA (B70) in the <Recipe 3> was not used and the barrier layer was not formed.

The following items were measured and graded as the followings for the fabrics of the Example 11, 12 and the Comparative Example 9, 10. The fabric hand was graded on the above (5). The results were shown in Table 4.

### (8)Weight of the fabric (g/m²)

It was measured to be the weight per 1 square meter of the fabric.

### (9)Thickness of the fabric (µm) [0111]

The thickness of the fabric was measured with a dial thickness gauge. The thickness of the part having the dot was measured for the thickness of the fabric of the Example 12.

### (10)Voluminousness of the fabric

The voluminousness of the fabric was graded with the following three graduations on the value of [(thickness of the fabric)/(weight of the fabric)].
○ · · · The value was more than 2.0. The voluminousness was very good.
Δ · · · The value was the range of 1.6 to 2.0. The voluminousness was a few.
× · · · The value was less than 1.6. The voluminousness was not.

### (11)Abrasive resistance

The surface of the fine porous polyurethane film was rubbed 100 times on the basis of the A-1 method described in JIS L-1084. After rubbing, the abrasive resistance was graded on the following three graduations by observing the abraded surface.
○ · · · The fine porous polyurethane film was a few damaged. The abrasive resistance was good.
Δ · · · The fine porous polyurethane film was damaged.
× · · · The fine porous polyurethane film was partially peeled from the barrier layer. The fabric could not used as the waterproof and moisture permeable fabric.

### (12)Three dimensionality and Attractivity

The three dimensionality and attractivity (clearness or vividness) were graded on the following four graduations by visualization.
⓪ · · · The three dimensionality and attractivity was good.
○ · · · The attractivity was good, but the three dimensionality was inferior.
Δ · · · The three dimensionality and attractivity was inferior. The foamed layer was same as a conventional resin film.

**[Table 4]**

| | Ex.11 | Ex.12 | Com.Ex.9 | Com.Ex10 |
|---|---|---|---|---|
| Weight of the fabric (g/m²) | 146 | 122 | 144 | 136 |
| Thickness of the fabric (µm) | 330 | 300 | 250 | 205 |
| Voluminousness of the fabric | ○ (2.26) | ○ (2.46) | Δ (1.74) | × (1.51) |
| Fabric hand | ○ | ○ | Δ | ○~Δ |
| Abrasive resistance | ○ | ○ | ○ | ○ |
| Three dimensionality and Attractivity | Δ | ⓪ | Δ | Δ |

The water penetration pressure and the moisture permeability were measured for the waterproof and moisture permeable fabric of the Example 12. The water penetration pressure was 152kPa on the basis of the method of high water pressure described in JIS L-1092. The moisture permeability was 6120g/m² · 24hrs on the basis of the A-1 method described in JIS L-1099.

As shown in the table 4, while the fabrics in the Example 11 and 12 were superior to the voluminousness and the fabric hand, the fabric in the comparative Example 9 and 10 were inferior to it.

### Example 13

### [Preparation of the fabric material]

A 2/2 twill was woven with 180 warps/2.5 cm and 75 wefts/2.5 cm. The warp was consisted of a nylon multi-filament which was 78 decitexes/68 filaments. The weft was consisted of a two folded yarn of nylon multi-filament which was 78 decitexes/68 filaments. The twill was scoured and dyed in 1% o.m.f. of Kayanol Blue NR sold by Nippon Kayaku Co., Ltd. with a conventional method. The twill was dipped in the following water dispersion, padded at 45% in pick up, dried and heat-treated at 170°C through 40 seconds. The water dispersion contained 6% by mass of Asahi-Guard AG-7000 sold by Asahi Glass Co., Ltd. as emulsion of fluorinated water repellent agent. The fabric material was prepared by the above-mentioned method.

### [Preparation of the synthetic resin solution]

It was prepared to be the synthetic resin solution which was consisted of the following <Recipe 8>. The synthetic resin solution contained 22% by mass of solid material. The viscosity of the synthetic resin solution was 1500mPa·s under 25°C.

### <Recipe 8>

| | |
|---|---|
| Himuren Y- 128NS | 100 parts by mass |
| (Solvent type solution containing polyurethane which was moisture permeable, sold by Dainichiseika Color & Chemicals Mfg. Co., Ltd.) | |
| Rezamin X Cross-linking agent | 1 parts by mass |
| (Diisocyanate, sold by Dainichiseika Color & Chemicals Mfg. Co., Ltd.) | |
| Microsphere H750D | 3 parts by mass |
| (Heat expansible micro capsules of which an average particle size was about 20 µm and a temperature for expanding was 40~170°C, sold by Dainichiseika Color & Chemicals Mfg. Co., Ltd.) | |
| Silica powder RA (B70) | 3 parts by mass |
| (Silica fine powders of which an average particle size was about 70µm, sold by Fuji Silysia Chemical Ltd.) | |
| Seikaseven X-2194 Red | 3 parts by mass |
| (Red colorant, sold by Dainichiseika Color & Chemicals Mfg. Co., Ltd.) | |
| Methyl ethyl ketone | 20 parts by mass |
| Toluene | 20 parts by mass |

### [Preparation of a solution for forming the waterproof and moisture permeable resin layer]

It was prepared to be the resin solution for forming the protective layer of the <Recipe 4> as the solution for forming the waterproof and moisture permeable resin layer.

### [Preparation of an adhesive solution]

It was prepared to be the adhesive solution which was consisted of the following <Recipe 9>. The adhesive solution contained 36% by mass of solid material. The viscosity of the adhesive solution was 2500mPa · s under 25°C.

### <Recipe 9>

| | |
|---|---|
| Himuren B-11 2NS | 100 parts by mass |
| (Solvent type solution containing polyurethane which was moisture permeable, sold by Dainichiseika Color & Chemicals Mfg. Co., Ltd.) | |
| Rezamin NE Cross-linking agent | 8 parts by mass |
| (Isocyanate, sold by Dainichiseika Color & Chemicals Mfg. Co., Ltd.) | |
| Rezamin HI-299 | 2 parts by mass |
| (Accelerant for cross-linking, sold by Dainichiseika Color & Chemicals Mfg. Co., Ltd.) | |
| Methyl ethyl ketone | 20 parts by mass |
| Toluene | 20 parts by mass |

### [Preparation of a release sheet]

A taffeta was woven with 115 warps/2.5 cm and 100 wefts/2.5 cm. The warp and the weft were both consisted of a nylon multi-filament which was 78 decitexes/48 filaments. The taffeta was scoured with a conventional method. The taffeta was dipped in the following mixed emulsion, padded at 35% in pick up, dried and heat-treated at 170°C through 1 minute. The mixed emulsion contained 2% by mass of silicone emulsion of Soft Silicone 150 sold by Dai-Ichi Kogyo Seiyaku Co., Ltd. and 7% by mass of fluorinated emulsion of AG950 sold by Asahi Glass Co., Ltd. as water repellent agent. After that, the taffeta was passed at 20m/min. in speed through a pair of calender rolls having a specular roll at 180°C and 300kPa in pressure, and the surface of the taffeta was closed. By the above-mentioned method, the release fabric was prepared.

### [Forming the waterproof and moisture permeable resin layer on the release sheet]

The solution for forming the waterproof and moisture permeable resin layer of the <Recipe 4> was applied on the surface (closed surface) of the release sheet at applied weight 120g/m² (dry resin weight 30g/m²) with a comma coater. And immediately, it was dipped through 1 minute in water at 20°C to coagulate the resin. It was formed to be the waterproof and moisture permeable resin layer of the fine porous resin film which was 50µm in average thickness by drying at 130°C through 2 minutes after washing through 5 minutes in hot water at 50°C.

### [Forming the synthetic resin layer on the waterproof and moisture permeable resin layer]

The synthetic resin solution of the <Recipe 8> was applied on the surface of the waterproof and moisture permeable resin layer with a gravure roll. The all surface of the gravure roll was engraved with lattice shape. A density of lines of the lattice was 5 lines/25.4mm. A depth of the line was 0.15mm. A space among neighbor lines was 1mm. The area for applying was about 20% area per the all surface of the gravure roll. After applying, it was formed that the synthetic resin layer contained about 10% by mass of the heat expansible micro capsules and was lattice pattern by drying at 120°C through 1 minute.

### [Forming an adhesive layer on the synthetic layer]

After forming the synthetic layer with lattice pattern, the adhesive solution of the <Recipe 9> was applied on the all surface (including the area on which the lattice pattern was not existent) of the lattice pattern synthetic resin layer at applied weight 38g/m² with a comma coater. The adhesive solution was applied on the lattice patterned synthetic resin layer and on the waterproof and moisture permeable resin layer in the area except the lattice patterned synthetic resin layer. It was formed to be the adhesive layer which was 13µm in average thickness after drying at 130°C through 1 minute.

### [Laminating the fabric material]

Immediately after forming the adhesive layer, the fabric material was laminated on the adhesive layer at 200kPa in pressure. By the above method, it is obtained to be laminated in order of the release sheet, the waterproof and moisture permeable resin layer, the synthetic resin layer, the adhesive layer and the fabric material.

### [Forming the foamed layer]

The release sheet was peeled off the lamination material after aging at 40°C through 3 days. The lamination material not having the release sheet was treated at 170°C through 1 minute in the heat-setter to expand the heat expansible micro capsules. By the above-mentioned method, the synthetic resin layer was the foamed layer and the waterproof and moisture permeable fabric having the foamed layer was obtained.

### Example 14

### [Preparation of a solution for forming the waterproof and moisture permeable resin layer]

It was prepared to be the solution for forming the waterproof and moisture permeable resin layer which was consisted of the following <Recipe 10>. The solution contained 22% by mass of solid material. The viscosity of the solution was 3000mPa · s under 25°C.

### <Recipe 10>

| | |
|---|---|
| Himuren T-21-1 | 100 parts by mass |
| (Moisture permeable polyurethane resin, sold by Dainichiseika Color & Chemicals Mfg. Co., Ltd.) | |
| Seikaseven DUT4093 White | 10 parts by mass |
| (White pigment, sold by Dainichiseika Color & Chemicals Mfg. Co., Ltd.) | |
| Methyl ethyl ketone | 15 parts by mass |
| N,N-dimethylformamide | 15 parts by mass |

### [Forming the waterproof and moisture permeable resin layer on the release sheet]

It was used to be the release paper EV130TPD sold by Lintec Corporation as the release sheet. The solution for forming the waterproof and moisture permeable resin layer of the <Recipe 10> was applied on the surface of the release sheet at applied weight 45g/m² with a comma coater. And that, it was formed to be the waterproof and moisture permeable resin layer of the non-porous resin film which was 10µm in thickness after drying at 100°C through 2 minutes.

After that, the fabric having the foamed layer was obtained by [Forming the synthetic resin layer on the waterproof and moisture permeable resin layer], [Forming an adhesive layer on the synthetic layer], [Laminating the fabric material] and [Forming the foamed layer] as the same method of the Example 13.

### Example 15

### [Preparation of slipping agent]

It was prepared to be the solution of the slipping agent which was consisted of the following <Recipe 11>. The solution contained 19% by mass of solid material. The viscosity of the solution was 3500mPa · s under 25°C.

### <Recipe 11>

| | |
|---|---|
| Himuren C-61 | 100 parts by mass |
| (Moisture permeable polyurethane resin, sold by Dainichiseika Color & Chemicals Mfg. Co., Ltd.) | |
| NPfiber W10-MG2 | 12 parts by mass |
| (Slipping agent of cellose, sold by Nippon Paper Chemicals Co., Ltd.) | |
| Methyl ethyl ketone | 30 parts by mass |

The waterproof and moisture permeable fabric having the foamed layer was obtained with the same method of the Example 14 except of adding the following process. That is, the process was to apply the solution of the slipping agent of the <Recipe 11> before the [Forming the foamed layer] after peeling off the release sheet at applied weight 20g/m² with a knife coater, and to form a dry-touch thin film which was 4 µm in average thickness by drying at 100°C through 1 minute.

### Example 16

### [Forming the synthetic layer on the one side surface of the fabric material]

The synthetic resin solution of the <Recipe 8> was applied on the one side surface of the fabric material with a gravure roll. The all surface of the gravure roll was engraved with lattice shape. A density of lines of the lattice was 5 lines/25.4mm. A depth of the line was 0.15mm. A space among neighbor lines was 1mm. The area for applying was about 20% area per the all surface of the gravure roll. After applying, it was formed that the synthetic resin layer contained about 10% by mass of the heat expansible micro capsules and was lattice pattern by drying at 120°C through 1 minute.

### [Forming an adhesive layer on the waterproof and moisture permeable resin layer]

The solution for forming the waterproof and moisture permeable resin layer of the <Recipe 10> was applied on the surface (closed surface) of the release fabric in the Example 13 at applied weight 45g/m² with a comma coater. And, it was formed to be the waterproof and moisture permeable resin layer of the non-porous resin film which was 10µm in thickness after drying at 100°C through 2 minutes. The adhesive solution of the <Recipe 9> was applied on the all surface of the waterproof and moisture permeable resin layer at applied weight 38g/m² with a comma coater. It was formed to be the adhesive layer which was 13µm in average thickness after drying at 130°C through 1 minute.

The synthetic resin layer of [Forming the synthetic layer on the one side surface of the fabric material] was laminated on the adhesive layer of [Forming an adhesive layer on the waterproof and moisture permeable resin layer] at 200kPa in pressure. By the above method, it is obtained to be laminated in order of the release sheet, the waterproof and moisture permeable resin layer, the adhesive layer, the synthetic resin layer and the fabric material. The lamination material was aging at 40°C through 3 days. After that, the solution of the slipping agent of the <Recipe 11> was applied on the surface of the waterproof and moisture permeable resin layer after peeling off the release sheet at applied weight 20g/m² with a knife coater, and it was formed to be a dry-touch thin film which was 4µm in average thickness by drying at 100°C through 1 minute. And, it was treated at 170°C through 1 minute in the heat-setter to expand the heat expansible micro capsules. By the above-mentioned method, the waterproof and moisture permeable fabric having the foamed layer was obtained.

### Comparative Example 11

The waterproof and moisture permeable fabric having the foamed layer was obtained with the same method of the Example 13 except forming the adhesive layer on the surface of the waterproof and moisture permeable layer by not using the [Forming the synthetic resin layer on the waterproof and moisture permeable resin layer] in the Example 13.

### Comparative Example 12

The waterproof and moisture permeable fabric having the foamed layer was obtained with the same method of the Example 14 except forming the adhesive layer on the surface of the waterproof and moisture permeable layer by not using the [Forming the synthetic resin layer on the waterproof and moisture permeable resin layer] in the Example 14.

### Comparative Example 13

The waterproof and moisture permeable fabric having the foamed layer was obtained with the same method of the Example 13 except that the Microsphere H750D in the <Recipe 8> was not used.

### Comparative Example 14

The waterproof and moisture permeable fabric having the foamed layer was obtained with the same method of the Example 14 except that the Microsphere H750D in the <Recipe 8> was not used.

The following items were measured and graded as the followings for the fabrics of the Example 13~16 and the Comparative Example 11~14. The water penetration pressure (kPa) was measured on the above (6). The results were shown in Table 5.

### (13)Moisture permeability (g/m² · 24hrs)

· A-1 moisture permeability was measured on the basis of the A-1 method described in JIS L-1099.
· B-1 moisture permeability was measured on the basis of the B-1 method described in JIS L-1099.

### (14)Design;

The design was graded on the three dimensionality and attractivity (clearness or vividness) by visualization as the following five graduations.
5 · · · The three dimensionality and attractivity was very superior.
4 · · · The three dimensionality and attractivity was superior.
3 · · · The three dimensionality and attractivity was a few inferior.
2 · · · Each of the three dimensionality and the attractivity was inferior.
1 · · · It was same as a conventional film not to design.

### (15)Abrasive resistance; on the A-1 method described in JIS L-1084.

The cloth (shirting No.3 cloth) was attached on the rubbing board and the test fabric was attached on the wheel. The test fabric was rubbed 100 times. After rubbing, the abrasive resistance was graded on the following five graduations by observing the transformation of the appearance.
5 · · · Not transformation
4 · · · A few transformation
3 · · · The waterproof and moisture permeable layer was a few damaged.
   The three dimensionality and the attractivity were a few lowered.
2 · · · The waterproof and moisture permeable layer was damaged.
   The three dimensionality and the attractivity were lowered.
1 · · · The waterproof and moisture permeable layer was damaged.
   The three dimensionality and the attractivity were extremely lowered.

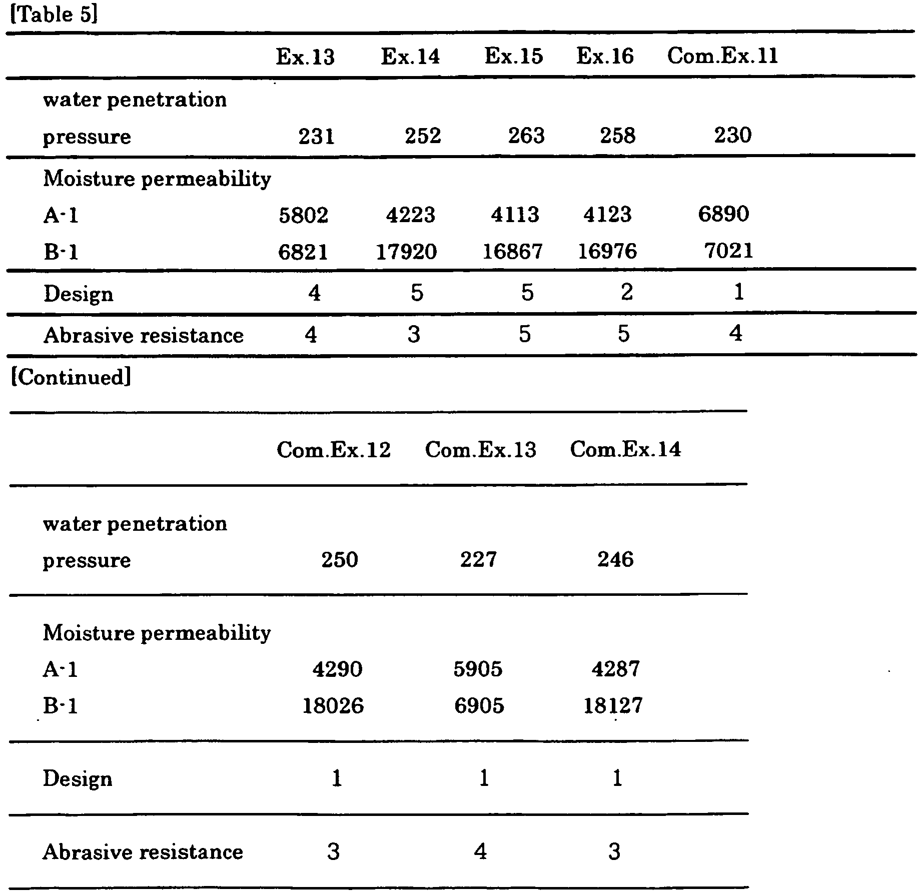

The designs of the waterproof and moisture permeable fabrics for the Comparative Example 11~14 were extremely lowered not to have the foamed layers in comparison with the fabrics having the foamed layers for the Example 13~16. The design of the waterproof and moisture permeable fabric for the Example 16 was lowered to be laminated in order of the fabric material, the foamed layer, the adhesive layer and the waterproof and moisture permeable resin layer than the design of the fabric for the Example 13~15. That is, because the expanded micro capsules in the Example 16 were indirectly contacted through the adhesive layer with the waterproof and moisture permeable resin layer, while the expanded micro capsules in the Example 13~15 were directly contacted with the waterproof and moisture permeable resin layer.

## Claims

1. Fabric having a foamed layer which is laminated the foamed layer on the one side surface of a fabric material, the foamed layer comprising of:
heat expanded micro capsules,
cross-linked synthetic resin to hold the heat expanded micro capsules on the one side surface of the fabric material, and
silica fine powders each of which is hydrophilic, comprises micropores and has a particle size between 0,01 and 200 µm and which are existent on the face of the each capsule wall and in the synthetic resin.

2. Fabric according to claim 1, **characterized in that** a protective layer preventing that the micro capsules drop out laminates on the surface of the foamed layer.

3. Fabric according to claim 2, **characterized in that** the protective layer is a waterproof and moisture permeable resin layer which is a non-porous resin film preferably having a thickness between 5 and 30 µm.

4. Fabric according to claim 2, **characterized in that** the protective layer is a waterproof and moisture permeable resin layer which is a laminated layer of a fine porous polyurethane resin film preferably having a pore ratio between 20 an 80 % and a barrier film;
the fine porous polyurethane resin film is obtained by wet-coagulated polyurethane resin solution containing N,N-dimethylformamide as main solvent,
the barrier film is a polyurethane thin film to prevent N,N-dimethylformamide to permeate, and
the synthetic resin in the foamed layer is cross-linked polyurethane resin.

5. Fabric according to claim 4, **characterized in that** the fine porous polyurethane resin film has a thickness between 5 and 200 µm, preferably between 10 and 100 µm.

6. Fabric according to any one of claims 1 to 5, **characterized in that** the foamed layer is formed with a pattern on the one side surface of the fabric material.

7. Fabric according to claim 3 or 4, **characterized in that** the foamed layer and the surface of the fabric material are laminated by an adhesive layer.

8. Fabric according to claim 7, **characterized in that** the foamed layer is formed with a pattern on the one side surface of the fabric material, and the patterned foamed layer and the surface of the fabric material are laminated by the adhesive layer, and
the waterproof and moisture permeable resin layer and the surface of the fabric material are laminated by the adhesive layer in the area that the patterned foamed layer is not existent.

9. Fabric according to any one of claims 1 to 8, **characterized in that** the synthetic resin in the foamed layer is a waterproof and moisture permeable cross-linked synthetic resin.

10. Method for producing the fabric according to claim 1, **characterized by** the following steps:
applying synthetic resin solution which contains heat expansible micro capsules and silica fine powders each of which is hydrophilic and fine porous on the one side surface of the fabric material,
forming a cross-linked synthetic resin layer by drying the applied synthetic resin solution, and
expanding the heat expansible micro capsules by heating the synthetic resin layer.

11. Method according claim 10 for producing the fabric according to claim 2, **characterized by** the further step of
laminating the protective layer on the synthetic resin layer after forming the cross-linked synthetic resin layer and before expanding the heat expansible micro capsules.

12. Method according to claim 10 for producing the fabric according to claim 3 or 4, **characterized by** the further steps of:
forming a waterproof and moisture permeable resin layer on a release sheet and
applying synthetic resin solution on the surface of the waterproof and moisture permeable resin layer, and
laminating a fabric material on the synthetic resin layer by an adhesive layer after forming the cross-linked synthetic resin layer and before
expanding the heat expansible micro capsules.

13. Method according to claim 12, **characterized by** the further steps:
applying synthetic resin solution with a pattern,
forming the patterned synthetic resin layer,
laminating the fabric material on the patterned synthetic resin layer by the adhesive layer,
thereby laminating the fabric material on the waterproof and moisture permeable resin layer in the area that the patterned synthetic resin layer is not existent.

14. Method according to claim 10 for producing the fabric according to claim 4, **characterized by** the further steps:
applying polyurethane synthetic resin solution which contains said heat expansible micro capsules and said silica fine powders;
after forming said cross-linked synthetic resin layer and before expanding said heat expansible micro capsules:
laminating a barrier layer of polyurethane thin film to prevent N,N-dimethylformamide to permeate on the synthetic resin layer,
applying polyurethane resin solution containing N,N-dimethylformamide as main solvent on the barrier layer,
forming a fine porous polyurethane resin film by wet-coagulating the polyurethane resin solution.

15. Method according to any one of claims 10 to 12 or 14, **characterized by** the further step: applying the synthetic resin solution with a pattern.

16. Method for foaming a synthetic resin layer, **characterized by** the steps of claim 10, wherein the synthetic resin solution is applied on the base sheet.

## Patentansprüche

1. Gewebe mit einer geschäumten Schicht, die auf die eine Oberflächenseite des Gewebematerials laminiert ist, **dadurch gekennzeichnet, daß** die geschäumte Schicht folgende Bestandteile aufweist: wärmeexpandierte Mikrokapseln, vernetztes Kunstharz zum Festhalten der wärmeexpandierten Mikrokapseln auf der einen Oberflächenseite des Gewebematerials, und Siliziumdioxid-Feinpulver, von denen jedes hydrophil ist sowie Mikroporen aufweist und eine Teilchengröße zwischen 0,01 und 200 µm besitzt, und die auf der Fläche jeder Kapselwand und in dem Kunstharz vorhanden sind.

2. Gewebe nach Anspruch 1, **dadurch gekennzeichnet, daß** eine Schutzschicht vorhanden ist, die verhindert, daß die Mikrokapseln aus dem Laminat auf die Oberfläche der geschäumten Schicht fallen.

3. Gewebe nach Anspruch 2, **dadurch gekennzeichnet, daß** die Schutzschicht eine wasserdichte und feuchtigkeitsdurchlässige Harzschicht ist, die einen nicht porösen Harzfilm bildet, der vorzugsweise eine Dicke zwischen 5 und 30 µm aufweist.

4. Gewebe nach Anspruch 2, **dadurch gekennzeichnet, daß** die Schutzschicht eine wasserdichte und feuchtigkeitsdurchlässige Harzschicht ist, die eine laminierte Schicht eines feinporösen Polyurethanharzfilms bildet, der vorzugsweise ein Porenverhältnis zwischen 20 und 80 % hat und ein Barrierefilm ist, wobei der feinporöse Polyurethanharzfilm durch eine naßkoagulierte Polyurethanharzlösung erhalten wird, die N, N-Dimethylformamid als Hauptlösungsmittel enthält, daß der Barrierefilm ein Polyurethandünnfilm ist, um zu verhindern, daß N, N-Dimethylformamid durchdringt, und daß das Kunstharz in der geschäumten Schicht vernetztes Polyurethanharz ist.

5. Gewebe nach Anspruch 4, **dadurch gekennzeichnet, daß** der feine poröse Polyurethanharzfilm eine Dicke zwischen 5 und 200 µm, vorzugsweise zwischen 10 und 100 µm aufweist.

6. Gewebe nach einem der Ansprüche 1 bis 5, **dadurch gekennzeichnet, daß** die geschäumte Schicht auf der einen Oberflächenseite des Gewebematerials mit einem Muster versehen ist.

7. Gewebe nach Anspruch 3 oder 4, **dadurch gekennzeichnet, daß** die geschäumte Schicht und die Oberfläche des Gewebematerials mit einer Klebschicht laminiert sind.

8. Gewebe nach Anspruch 7, **dadurch gekennzeichnet, daß** die geschäumte Schicht auf der einen Oberflächenseite des Gewebematerials mit einem Muster versehen ist und die gemusterte geschäumte Schicht sowie die Oberfläche des Gewebematerials mit der Klebschicht laminiert sind, und daß die wasserdichte und feuchtigkeitsdurchlässige Harzschicht sowie die Oberfläche des Gewebematerials mit der Klebschicht in dem Bereich laminiert sind, in dem die gemusterte geschäumte Schicht nicht vorhanden ist.

9. Gewebe nach einem der Ansprüche 1 bis 8, **dadurch gekennzeichnet, daß** das Kunstharz in der geschäumten Schicht ein wasserdichtes und feuchtigkeitsdurchlässiges, vernetztes Kunstharz ist.

10. Verfahren zur Herstellung des Gewebes nach Anspruch 1, **gekennzeichnet durch** die folgenden Schritte: Aufbringen einer Kunstharzlösung, die wärmeexpandierende Mikrokapseln und Siliziumdioxid-Feinpulver enthält, von denen jedes hydrophil und feinporös ist, auf der einen Oberflächenseite des Gewebematerials; Bilden einer vernetzten Kunstharzschicht **durch** Trocknen der aufgebrachten Kunstharzlösung; und Expandieren der wärmedehnbaren Mikrokapseln **durch** Erhitzen der Kunstharzschicht.

11. Verfahren nach Anspruch 10 zur Herstellung des Gewebes gemäß Anspruch 2, **gekennzeichnet durch** einen weiteren Schritt des Laminierens der Schutzschicht auf die Kunstharzschicht, nachdem die vernetzte Kunstharzschicht gebildet ist und bevor die wärmeausdehnbaren Mikrokapseln expandieren.

12. Verfahren nach Anspruch 10 zur Herstellung des Gewebes gemäß Anspruch 3 oder 4, **gekennzeichnet durch** die weiteren Schritte des Bilden einer wasserdichten und feuchtigkeitsdurchlässigen Harzschicht auf einer Freigabefläche und Aufbringen einer Kunstharzlösung auf der Oberfläche der wasserdichten und feuchtigkeitsdurchlässigen Harzschicht, sowie Laminieren eines Gewebematerials auf der Kunstharzschicht mit Hilfe einer Klebeschicht nach dem Ausbilden der vernetzten Kunstharzschicht und vor dem Expandieren der wärmeausdehnbaren Mikrokapseln.

13. Verfahren nach Anspruch 12, gekennzeichnet weiter durch die Schritte: Aufbringen einer Kunstharzlösung mit einem Muster, Ausbilden der gemusterten Kunstharzschicht, Laminieren des Gewebematerials auf der gemusterten Kunstharzschicht mit Hilfe der Klebstoffschicht, und dadurch Laminieren des Gewebematerials auf der wasserdichten und feuchtigkeitsdurchlässigen Harzschicht in dem Bereich, in dem die gemusterte Kunstharzschicht nicht existiert.

14. Verfahren nach Anspruch 10 zur Herstellung des Gewebes gemäß Anspruch 4, **gekennzeichnet durch** die weiteren Schritte: Aufbringen einer Polyurethankunstharzlösung, die die wärmeausdehnbaren Mikrokapseln und die Siliziumdioxid-Feinpulver enthält; nach dem Ausbilden der vernetzten Kunstharzschicht und vor dem Ausdehnen der wärmeausdehnbaren Mikrokapseln Laminieren einer Barriereschicht eines dünnen Polyurethanfilms, um zu verhindern, daß N, N-Diethylformamid die synthetische Kunstharzschicht durchdringt; Aufbringen der Polyurethanharzlösung, die N, N-Diethylformamid als Hauptlösungsmittel enthält, auf der Barriereschicht, und Bilden eines feinporösen Polyurethanharzfilms **durch** Naßkoagulation der Polyurethanharzlösung.

15. Verfahren nach einem der Ansprüche 10 bis 12 oder 14, **gekennzeichnet durch** den weiteren Schritt des Aufbringens der Kunstharzlösung mit einem Muster.

16. Verfahren zum Aufschäumen einer Kunstharzschicht, **gekennzeichnet durch** die Schritte von Anspruch 10, wobei die Kunstharzlösung auf der Basisfläche aufgebracht wird.

## Revendications

1. Tissu ayant une couche en mousse qui est laminée sur une surface latérale d'un matériau à base de tissu, la couche en mousse étant constituée :
de microcapsules thermoexpansées,
de résine synthétique réticulée pour tenir les microcapsules thermoexpansées sur la surface latérale du matériau à base de tissu, et
de poudres fines de silice qui sont chacune hydrophile, qui comprennent des micropores et présentent des particules d'une taille entre 0,01 et 200 µm, et qui existent sur la face de chaque paroi de capsules et dans la résine synthétique.

2. Tissu selon la revendication 1, **caractérisé en ce qu'**une couche protectrice empêchant la chute des microcapsules est laminée sur la surface de la couche en mousse.

3. Tissu selon la revendication 2, **caractérisé en ce que** la couche protectrice est une couche de résine étanche à l'eau et perméable à l'humidité, qui est un film en résine non poreuse ayant de préférence une épaisseur entre 5 et 30 µm.

4. Tissu selon la revendication 2, **caractérisé en ce que** la couche protectrice est une couche de résine étanche à l'eau et perméable à l'humidité, qui est une couche laminée d'un mince film en résine au polyuréthane poreux ayant de préférence un rapport de porosité entre 20 et 80 % et un film formant barrière ;
le film mince en résine au polyuréthane poreux est obtenu par coagulation en voie humide d'une solution de résine de polyuréthane contenant N,N-diméthyle formamide à titre de solvant principal,
le film formant barrière est un mince film en polyuréthane pour empêcher au N,N-diméthyle formamide de passer par perméation, et
la résine synthétique dans la couche en mousse est une résine au polyuréthane réticulé.

5. Tissu selon la revendication 4, **caractérisé en ce que** le mince film de résine au polyuréthane poreux a une épaisseur entre 5 et 200 µm, de préférence entre 10 et 100 µm.

6. Tissu selon l'une quelconque des revendications 1 à 5, **caractérisé en ce que** la couche en mousse est formée avec un motif sur la surface latérale du matériau à base de tissu.

7. Tissu selon la revendication 3 ou 4, **caractérisé en ce que** la couche en mousse et la surface du matériau à base de tissu sont laminées par une couche adhésive.

8. Tissu selon la revendication 7, **caractérisé en ce que** la couche en mousse est formée avec un motif sur la surface latérale du matériau à base de tissu, et la couche en mousse avec motif et la surface du matériau à base de tissu sont laminées par la couche adhésive, et
la couche en résine étanche à l'eau et perméable à l'humidité et la surface du matériau à base de tissu sont laminées par la couche adhésive dans la zone dans laquelle la couche en mousse avec motif n'existe pas.

9. Tissu selon l'une quelconque des revendications 1 à 8, **caractérisé en ce que** la résine synthétique dans la couche en mousse est une résine synthétique réticulée étanche à l'eau et perméable à l'humidité.

10. Procédé pour produire le tissu selon la revendication 1, **caractérisé par** les étapes suivantes :
on applique une solution de résine synthétique qui contient des microcapsules thermoexpansibles et des poudres fines de silice qui sont chacune hydrophiles et finement poreuses sur la surface latérale du matériau à base de tissu,
on forme une couche de résine synthétique réticulée en séchant la solution appliquée de résine synthétique, et
on met en expansion les microcapsules thermoexpansibles en chauffant la couche de résine synthétique.

11. Procédé selon la revendication 10 pour produire le tissu selon la revendication 2, **caractérisé par** l'étape supplémentaire consistant à laminer la couche protectrice sur la couche de résine synthétique après avoir formé la couche de résine synthétique réticulée et avant de mettre en expansion les microcapsules thermoexpansibles.

12. Procédé selon la revendication 10 pour produire le tissu selon la revendication 3 ou 4, **caractérisé par** l'étape supplémentaire consistant à :
former une couche de résine étanche à l'eau et perméable à l'humidité sur une feuille à dégager, et
appliquer une solution de résine synthétique sur la surface de la couche de résine étanche à l'eau et perméable à l'humidité, et
laminer un matériau à base de tissu sur la couche de résine synthétique par une couche adhésive après avoir formé la couche de résine synthétique réticulée et avant de mettre en expansion les microcapsules thermoexpansibles.

13. Procédé selon la revendication 12, **caractérisé par** l'étape supplémentaire consistant à :
appliquer une solution de résine synthétique avec un motif,
former la couche de résine synthétique avec motif,
laminer le matériau à base de tissu sur la couche de résine synthétique avec motif par la couche adhésive,
en laminant ainsi le matériau à base de tissu sur la couche de résine étanche à l'eau et perméable à l'humidité dans la zone dans laquelle la couche de résine synthétique avec motif n'existe pas.

14. Procédé selon la revendication 10 pour produire le tissu selon la revendication 4, **caractérisé par** les étapes supplémentaires consistant à:
appliquer une solution de résine synthétique au polyuréthane qui contient lesdites microcapsules thermoexpansibles et lesdites poudres fines de silice ;
après avoir formé ladite couche de résine synthétique réticulée et avant de mettre en expansion lesdites microcapsules thermoexpansibles :
laminer une couche formant barrière d'un mince film en polyuréthane pour empêcher au N,N-diméthyle formamide de passer par perméation sur la couche de résine synthétique,
appliquer une solution de résine au polyuréthane contenant du N,N-diméthyle formamide à titre de solvant principal sur la couche formant barrière,
former un film de résine au polyuréthane finement poreux par coagulation en voie humide de la solution de résine au polyuréthane.

15. Procédé selon l'une quelconque des revendications 10 à 12 ou 14, **caractérisé par** l'étape supplémentaire consistant à appliquer la solution de résine synthétique avec un motif.

16. Procédé pour faire mousser une couche de résine synthétique, **caractérisé par** les étapes de la revendication 10 et dans lequel la solution de résine synthétique est appliquée sur la feuille de base.
